Europäisches Patentamt

**European Patent Office**

Office européen des brevets

(11) Numéro de publication: **0 178 206 B1**

(12) **FASCICULE DE BREVET EUROPEEN**

(45) Date de publication du fascicule du brevet:
**22.03.89**

(21) Numéro de dépôt: **85401781.1**

(22) Date de dépôt: **16.09.85**

(51) Int. Cl.⁴: **B64C 39/02**, B64C 9/14

(54) Conception d'un U.L.M. Bi-Moteur.

(30) Priorité: **28.09.84 FR 8414913**
**04.01.85 FR 8500077**

(43) Date de publication de la demande:
**16.04.86 Bulletin 86/16**

(45) Mention de la délivrance du brevet:
**22.03.89 Bulletin 89/12**

(84) Etats contractants désignés:
**BE DE GB IT**

(56) Documents cités:
**FR-A- 978 969**
**GB-A- 487 049**
**US-A- 3 439 890**
**US-A- 3 441 236**
**US-A- 4 415 131**
**US-A- 4 424 946**

(73) Titulaire: **Aubertin, Henri, 92, Les Bois du Cerf Etiolles, F-91450 Soisy sur Seine(FR)**

(72) Inventeur: **Aubertin, Henri, 92, Les Bois du Cerf Etiolles, F-91450 Soisy sur Seine(FR)**

## Description

L'invention se rapporte à un engin volant Ultra-Léger-Motorisé (U.L.M), de type Avion, c'est-à-dire actionné par gouvernes séparées, selon les trois axes conventionnels (élévation, direction, gauchissement).

Lorsque l'on traite d'U.L.M., il convient de bien définir le type considéré. Il existe, en effet, le type dit «Pendulaire», ne comportant qu'un chariot-siège motorisé suspendu par cardan au centre de gravité d'une aile simple, généralement de forme «delta». Les variations d'assiette sont, dans ce cas, obtenus par déplacement du centre de gravité.

Ce système est simple et sportif, mais comporte, en son principe même, un très grave défaut pour un pilote professionnel, car la commande de manœuvre s'effectue exactement à l'inverse de ses habitudes sur avion standard. D'où, d'une part, danger par incompatibilité, et, d'autre part impossibilité d'utilisation en école de pilotage de base.

C'est pourquoi a été conçu l'U.L.M. «Multi-Axes», à gouvernes séparées. Certains de ces Multi-Axes ne comportent, en fait, que deux axes, profondeur et direction, sans gauchissement, ce qui constitue une grave carence en cas de vent de travers lors de l'atterrissage.

Un U.L.M. sérieux de type «Avion» comporte donc trois orientations de gouvernes séparées, et se désigne comme «Trois-Axes», ce qui est le cas du projet présenté.

Un engin volant U.L.M., de type avion «Trois-Axes», bimoteur, à gouvernes de vol séparées et emprennage stabilisateur arrière, conforme au préambule de la revendication 1 de la présente demande de brevet, est déjà connu du brevet US-A 4 424 946.

Cependant, dans ce brevet antérieur, les deux moteurs sont disposés latéralement de part et d'autre du fuselage, d'où, en cas de panne de l'un quelconque de ceux-ci, ce qui est la raison d'être de leur dualité, existence d'un très fort couple de lacat, et violente dissymétrie de traction, imposant un excellent entrainement du pilote.

Par ailleurs, l'emprennage stabilisateur arrière est du type dit «papillon» c'est-à-dire en «V», ici inversé, et non en structure «tunnel» rectangulaire.

Le but de la présente invention est de proposer un engin U.L.M. très facile à plier, sans dépose, pour transport routier et remisage, aisé à mettre en œuvre, utiliser et entretenir et capable de voler en toute sécurité à très basse vitesse.

Ce problème est résolu par les trois caractéristiques essentielles de la revendication 1, à savoir:
– des ailes rabattables sans dépose,
– un emprennage stabilisateur arrière de type annulaire,
– un système d'hyper-sustentation approprié.

Le système d'articulation des ailes de cet U.L.M. permet sans dépose, son pliage rapide (temps inférieur à 15 minutes, par une seule personne), pour transport routier, par rotation des axes concentriques d'un cardan et placage de ces ailes le long du fuselage.

Le système d'empennage arrière annulaire, associé à une disposition des deux moteurs en tandem push-pull assure, aux basses vitesses de vol, principalement du fait du soufflage rectiligne redressé au centre de cet empennage annulaire, une précision de manœuvre particulièrement améliorée par rapport au système classique. De plus, en cas d'arrêt intempestif de l'un des deux moteurs, la diminution de puissance n'entraîne pas de dissymétrie latérale de traction ou propulsion, le centre de poussée des deux hélices étant situé sur l'axe longitudinal de l'avion.

Afin d'améliorer la sécurité du vol aux très basses vitesses, a été conçu un système Hyper-Sustentateur par accélération de l'écoulement de l'air sur l'extrados de la voiture, sans déformation de la courbure du profil, et ce, par ouverture de trappes à la partie avant (bord d'attaque) de l'intrados (dessous de l'aile); il s'ensuit une circulation d'air forcée à l'intérieur de la voiture, et un raccrochage de l'écoulement des filets d'air sur la partie arrière de l'extrados.

Le brevet US-A 3 439 890 nous montre un système de pliage d'ailes comportant une structure lourde et complexe, peu compatible avec la conception «U.L.M.» imposant des solutions simples, légères et rustiques.

Le brever FR–A 978 969 décrit un système d'hyper-sustentation par fentes de bords d'attaque. La fente d'intrados (dessous) est bien obturable, en vol de croisière, par un volet mobile. Cependant, la prise d'air inférieure ne comporte pas de bec mobile de bord d'attaque en sa partie arrière et la sortie d'air, sur l'extrados (dessus), s'effectue très près du bord d'attaque, et non, conformément à la présente invention, au-delà de la partie médiane de l'extrados de l'aile, vers l'arrière, ceci afin d'accélérer l'écoulement de l'air dans cette zone, et créer, en amont, une dépression tendant, aux fortes incidences de vol, à recoller les filets d'air dans la zone sensible, située légèrement en avant de la partie médiane de l'extrados.

La description qui suit, de l'U.L.M. selon l'invention, fait référence au dessin annexé comportant les figures suivantes:
Fig. 1: Vue en plan (de dessus).
Fig. 2: Vue de profil (côté gauche).
Fig. 3: Vue de face (avant).
Fig. 4, 5, 6: Disposition du système de pliage et de fixation des ailes, par leur emplanture, sur la partie haute du fuselage, afin d'obtenir la configuration des
Fig. 7: de face, plié.
Fig. 8: de profil (gauche), plié.
Fig. 9: Implantation (sur l'aile gauche) du système d'hyper-sustentation, avec vues en coupe de son fonctionnement:
Fig. 10: Configuration «croisière»: prise d'air fermée.
Fig. 11: Décollage: volet en position intermédiaire.
Fig. 12: Atterrissage: Volet de prise d'air plein ouvert.

Pour les explications qui vont suivre, nous traiterons en rérérence, de l'aile gauche, l'aile droite lui étant rigoureusement symétrique.

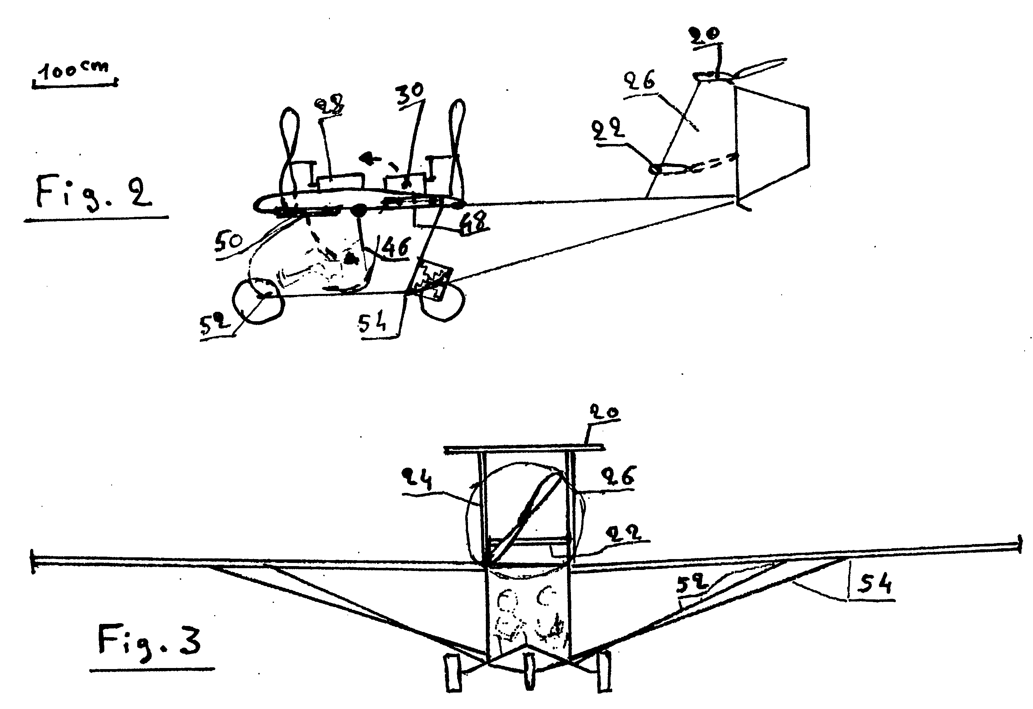

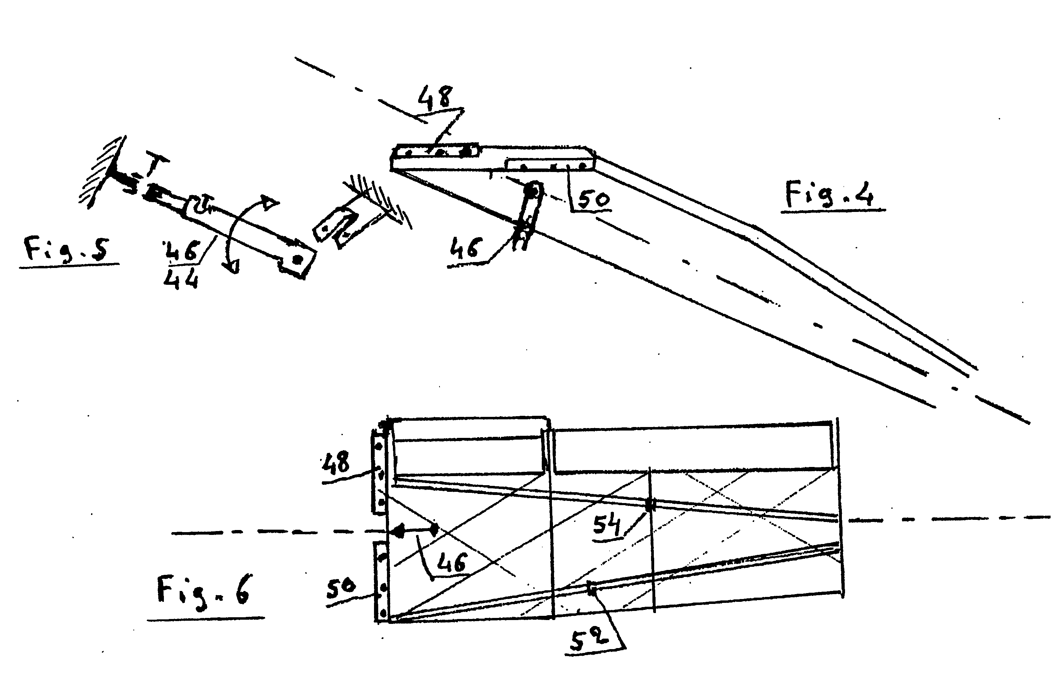

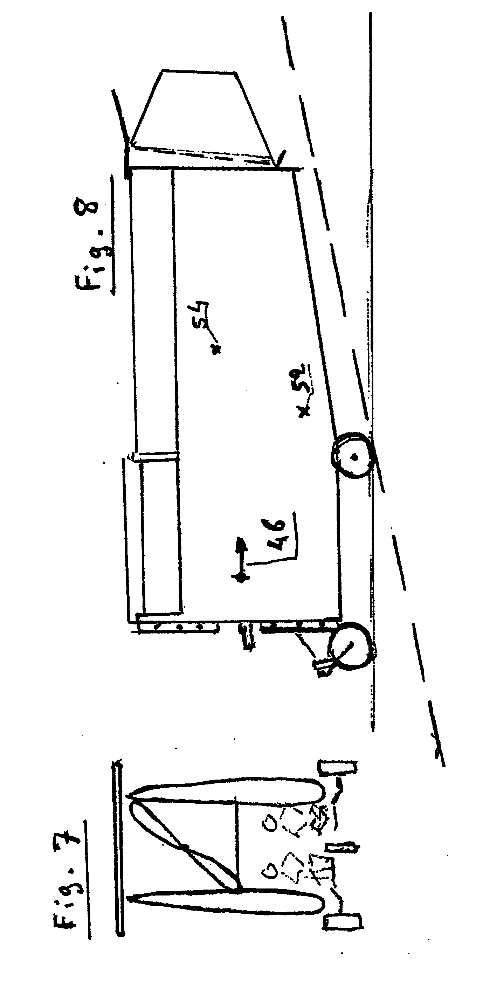

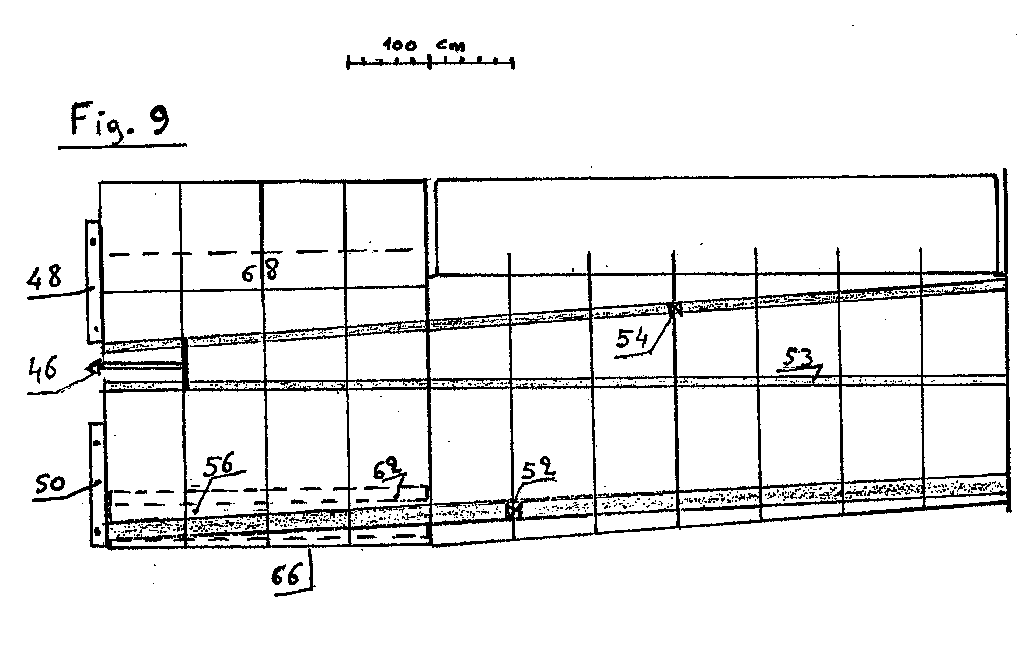

L'aile, soutenue par les deux haubans rigides (52 et 54) est fixée à la partie haute du fuselage, du côté de son emplanture, par deux consoles décalées (48 et 50) (Fig. 4), boulonnées sur la partie haute du fuselage (Fig. 3).

Selon l'axe médian de l'aile, et côté intrados (dessous) est placé un système type cardan tournant (44 pour l'aile droite, 46 pour l'aile gauche, Fig. 4 et 5). Ce cardan (46), d'une longueur de 50 cm, est conçu de telle façon qu'il permet un mouvement dans le plan horizontal en sa partie fixée au sommet du fuselage, et un mouvement dans le plan vertical en sa partie fixée sous l'intrados de l'aile. De plus, ces deux éléments du cardan sont disposés chacun à une extrémité d'un tube (un tube comportant un élément à l'une de ses extrémités). Les deux tubes étant ajustés par emboitement l'un à l'intérieur de l'autre, l'ensemble mesurant 50 cm de longueur, une rotation concentrique leur est admise par le jeu d'une fente circonférentielle partielle sur le tube extérieur, limitée par la position d'une vis-butée de maintien sur le tube intérieur.

La manœuvre de pliage se passe de la façon suivante (aile gauche, l'aile droite lui étant symétrique):

Débloquer les écrous de fixation des consoles d'emplanture de l'aile (48 et 50) (Fig. 4 et Fig. 2).

Dé-connecter et déposer les deux haubans rigides (52 et 54). L'extrémité de l'aile (ou «saumon») repose alors sur le sol.

Retirer les boulons de fixation (en 48 et 50).

Tenir l'aile par son extrémité (saumon), et la mettre horizontale. Puis, (Fig. 2), la faire pivoter de 90° sur son cardan (46), dans le sens inverse des aiguilles d'une montre.

L'aile se trouve alors dressée verticalement sur chant, son avant (bord d'attaque) vers le bas, son arrière (bord de fuite) vers le haut.

Telle que disposée ainsi, rabattre l'aile vers l'arrière le long du fuselage. Puis ramener cette aile vers l'avant en faisant basculer longitudinalement le cardan (46) de 180°, ce qui fait avancer vers l'avant la partie emplanture de l'aile de deux fois la longueur du cardan, soit 50cm × 2 = 1m. L'on obtient alors, après placage de l'aile le long du fuselage, la configuration de la Fig. 8.

Procéder de façon symétrique avec l'aile droite.

L'on constate (Fig. 7) que l'U.L.M. est alors ramené à des cotes d'encombrement autorisant le transport sur remorque routière légère. Pour des raisons de limitation d'encombrement latéral, l'envergure du plan stabilisateur horizontal arrière a été réduite, sans pour autant que soit diminuée sa surface utile. Cela a été obtenu par une disposition de ce plan fixe horizontal en deux éléments parallèles superposés (20 et 22), (Fig. 2 et 3), dont les gouvernes mobiles de profondeur sont asservies deux par deux en parallèle.

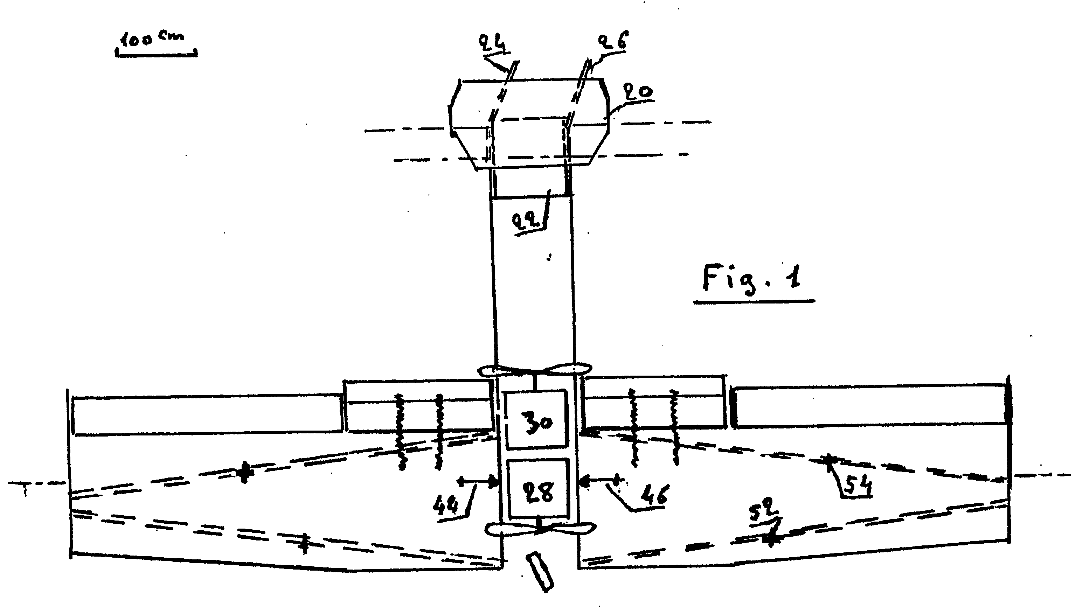

L'ensemble de l'empennage arrière est maintenu rigide par les deux dérives verticales de direction (24 et 26), (Fig. 1 et 3), également parallèles, et aux gouvernes mobiles de direction asservies deux par deux.

Cet ensemble constituant l'empennage stabilisateur arrière est donc de type annulaire, c'est-à-dire que l'écoulement de l'air dû à la vitesse de déplacement de l'avion s'ajoute à l'intérieur du volume ainsi défini, au souffle dû à la rotation des hélices. Les deux moteurs (28 et 30) sont identiques, ont le même sens de rotation, mais sont montés en disposition dite «push-pull», c'est-à-dire dos à dos, le moteur avant (28) étant équipé d'une hélice tractive, le moteur arrière (30) d'une hélice propulsive. Ainsi, le souffle hélicoïdal produit par l'hélice avant est redressé par son passage au travers de l'hélice arrière.

Le résultat est que l'empennage stabilisateur bénéficie de son efficacité optimale, sans distorsion ni dissymétrie.

Cet appareil étant prévu pour une utilisation rustique, doit pouvoir se contenter, pour décollages et atterrissages, de bandes de terrain très courtes, d'où nécessité de réduire la vitesse minimum de sécurité de vol par le moyen d'un système dit «Hyper-Sustentateur».

Sachant que l'analyse de la mécanique du vol démontre que, aux pressions d'air sur l'intrados de la voilure (dessous), correspondent des zones de dépression plus importantes sur l'extrados (dessus), l'hyper-sustentation, c'est-à-dire l'augmentation artificielle de portance de l'aile aux angles élevés d'incidence de vol, et à vitesse anémométrique réduite, est assurée par une accélération de l'écoulement de l'air sur l'extrados par rapport à l'intrados.

Le moyen traditionnellement réalisé pour y parvenir est classique: Becs de bord d'attaque (à l'avant de l'aile côté intrados) et volets de courbure au niveau du bord de fuite (arrière de l'aile), ayant pour effet, par augmentation de la longueur extrados/intrados, d'accélérer l'écoulement de l'air sur l'extrados, donc d'augmenter la dépression relative sur l'extrados. Ce système, éprouvé, exige une certaine cynématique de manœuvre, peu compatible avec l'utilisation rustique d'un U.L.M.

Le procédé Hyper-Sustentateur élaboré ici est donc le suivant:

Soit (Fig. 9) l'aile gauche, vue de dessus, l'emplanture de l'aile (fixation à la cellule) à gauche sur le dessin, le bord d'attaque (avant) vers le bas, le bord de fuite (arrière) vers le haut.

L'aile est maintenue rigide par les trois longerons (52, 53 et 54), associés à des nervures disposées perpendiculairement aux premiers selon le profil de l'aile.

La zone d'hyper-sustentation concerne la partie de l'aile comprise entre l'emplanture et la gouverne-aileron (Fig. 9).

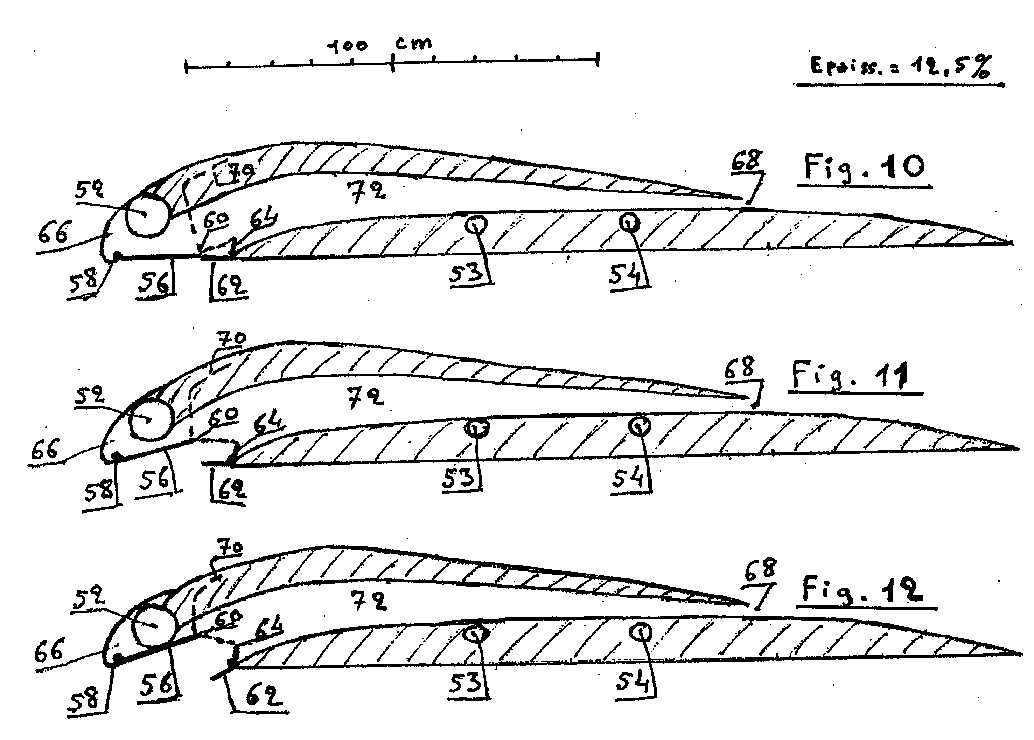

Les Fig. 10, 11, 12 sont des vues en coupe de cette zone d'hyper-sustentation.

Juste sous le bord d'attaque (66), une trappe (56) mobile à son avant, selon une charnière (58), est maintenue fermée par un système de ressort ou de sandow: configuration «croisière» (Fig. 10).

La traction du câble de commande (70), fixé sur la trappe (56) en (60), amène l'ouverture de cette trappe: configuration «décollage » (Fig. 11).

Il est important de remarquer que cette position (Fig. 11) du volet (56) donne au bord d'attaque de l'aile un profil dit «à bec de bord d'attaque», améliorant considérablement l'écoulement de l'air sur l'extrados, donc la portance de l'aile aux basses vitesses.

Mais cette ouverture du volet (56) a pour effet principal de permettre le passage de l'écoulement d'air dû au déplacement de l'avion, à l'intérieur du tunnel (72). Cet écoulement d'air forcé ressort en (68), sur la partie arrière de l'extrados, créant, en amont de la zone (68), sur l'extrados, une dépression qui ne peut qu'accélérer l'écoulement de l'air le long de ce même extrados et améliorer le recollement des filets d'air en cette zone critique de voilure. Le résultat final est un net abaissement de la vitesse de décrochage, aux grands angles d'incidence et aux basses vitesses de vol. Ce qui ne peut que convenir à l'amélioration de la sécurité du vol et de la précision d'atterrissage.

Configuration «atterrissage» (Fig. 12): Si l'on augmente la traction sur le câble (70), l'on augmente l'ouverture de la trappe (56). Celà a pour effet, par traction en (60) d'un câble de liaison sur le levier (64), d'ouvrir solidairement une deuxième trappe (62) moins large que (56), car s'ouvrant à l'opposé du sens d'écoulement de l'air.

L'ouverture de cette trappe (62), s'ajoutant à celle de la trappe (56), a pour premier résultat l'amélioration de l'écoulement de l'air à l'intérieur du tunnel (72) du fait de la forme en «bec» du pseudo-bord d'attaque (62).

Le résultat essentiel est l'accélération de l'écoulement de l'air à travers (72) vers (68), du fait de l'action forcée de la trappe (62), fonctionnant en prise d'air dynamique.

La conséquence finale est une amélioration très importante des conditions de portance et de sécurité de vol cités plus haut, et ce, au prix d'une très faible altération du paramètre «trainée».

Le relâchement de la traction du câble (70) amène le relâchement initial du volet (56), et la mise à l'horizontale du volet (62), par traction, en (64), d'un ressort ou sandow de rappel, d'où retour à la position de la fig. 11: «décollage».

En deuxième temps, le relâchement continu de la traction du câble (70) amène, par traction d'un ressort ou sandow de rappel fixé en (60), la fermeture (mise à l'horizontale) du volet (56), donc, retour à la position de la Fig. 10: «croisière, l'intrados de la voilure retrouvant alors un profil lisse continu, convenant au vol à vitesse élevée.

Il est à noter que sur un engin volant plus lourd que l'air (avion ou autre), disposant d'une source d'énergie suffisante, un moteur électrique peut entrainer, à l'intérieur du tunnel (72), une turbine de ventilation mise en route lors de l'utilisation en phases critiques de vol. Les moteurs électriques d'entrainement des turbines de ventilation des tunnels des ailes doivent alors être alimentés ensemble en série, afin de pallier au risque de panne dissymétrique.

Ce perfectionnement, à condition de disposer d'une source électrique et d'une maintenance suffisantes, et en utilisant, par exemple, une turbine à aubages tangentiels, permettrait de réduire l'ouverture de la prise d'aire à l'avant de l'intrados, donc de diminuer la trainée induite, tout en améliorant l'avantage de l'accélération de lécoulement de l'air sur l'extrados.

Remarque très importante: ce système hyper-sustentateur outre sa simplicité cynématique, n'induit aucun couple piqueur (tendance longitudinale vers le bas) lors de sa mise en œuvre, contrairement à tous les systèmes classiques de volets de bords de fuite à courbure de profil.

En conséquence, ce système d'Hyper-Sustentation par «Ventilation de Voilure» peut être utilisé efficacement, non seulement sur avions de types classiques, mais, également, sur aile volante (U.L.M. pendulaire, par exemple) ou avion à voilure «Delta» (sans empennage stabilisateur horizontal).

## Revendications

1. Engin volant U.L.M., de type Avion trois-axes, bimoteur, à gouvernes de vol séparées, et empennage stabilisateur arrière, caractérisé en ce qu'il comporte:

a) des ailes rabattables sans dépose, leur articulation étant située au point de fixation de l'emplanture sur la partie haute du fuselage, les ailes repliées étant plaquées complètement contre les côtés verticaux du fuselage;

b) un empennage stabilisateur arrière, de type annulaire, d'encombrement latéral réduit, composé de deux éléments horizontaux de profondeur (20, 22), disposés horizontalement, parallèles, logés entre deux éléments de direction (24, 26), verticaux et parallèles;

c) un système d'hyper-sustentation, uniquement sur le plan principal (porteur), la sortie d'air de circulation par ventilation interne de la voilure étant située en arrière de la partie médiane de l'extrados (dessus de la voilure).

2. Engin volant selon la revendication 1, caractérisé en ce que le pliage des ailes s'effectue par la simple déconnection des haubans (52, 54) et des consoles (48, 50) d'emplanture de l'aile, puis par la rotation de l'aile sur son axe médian, au moyen d'un cardan tournant (46) et le placage le long du fuselage, de cette aile ramenée vers l'avant, par basculement du cardan (46).

3. Engin volant selon la revendication 1, caractérisé en ce que le stabilisateur horizontal arrière de profondeur est constitué de deux éléments (20, 22) parallèles, superposés, maintenus en place par les gouvernes verticales de direction (24, 26).

4. Engin volant selon les revendications 1 et 3, caractérisé en ce qu'un écoulement constant et rectiligne de l'air à l'intérieur de l'empennage est obtenu par l'action contraire des hélices des moteurs (28, 30), montés en tandem «push-pull», c'est-à-dire contra-rotatifs.

5. Engin volant selon la revendication 1, caractérisé en ce que l'hyper-sustentation est obtenue par l'accélération de l'écoulement d'air sur l'extrados (dessus de la voilure), au moyen d'une prise d'air située à l'intrados (dessous de la voilure), sous le bord d'attaque, à l'avant, par ouverture d'un premier volet (56), puis, dans un deuxième temps, d'un second volet (62), sans modification de profil général de la voilure.

6. Engin volant selon les revendications 1 et 5, caractérisé en ce que le dispositif hyper-sustentateur peut être complété, à l'intérieur du tunnel (72) de la prise d'air, par une turbine à aubages tangentiels, par exemple à entrainement électrique, assurant une circulation d'air forcé à l'intérieur du tunnel (72), aux très basses vitessese de vol.

7. Engin volant selon les revendications 1, 5, et 6, caractérisé en ce que deux turbines associées respectivement à chaque aile sont alimentées électriquement en série.

**Patentansprüche**

1. Ultraleichtflugzeug, flugzeugartig mit drei Achsen, zwei-motorig, mit unabhängigen Steuerrudern und Leitwerk hinten; dadurch gekennzeichnet, daß es enthält:

a) zusammenklappbare Flügel, die nicht abgenommen werden, wobei sich ihr Gelenk am Befestigungspunkt des Flügelwurzels auf dem oberen Teil des Rumpfes befindet, wobei die zusammengeklappten Flügel sich vollständig an die Seitenflächen des Rumpfes anschmiegen.

b) ein hinten angebrachtes Leitwerk tunnelartiger Form mit geringen Seitenausmaßen, bestehend aus zwei horizontalen Höhenelementen (20, 22), die horizontal und parallel ausgerichtet sind und die zwischen zwei Seitenelementen (24, 26) untergebracht sind, die vertikal und parallel ausgerichtet sind.

c) ein Hyperauftriebssystem, ausschließlich auf der tragenden Fläche wirkend, wobei sich der Ausgang des durch innere Belüftung des Tragwerkes entstehenden Luftstromes hinter dem mittleren Teil der Saugfläche (Flügeloberseite) befindet.

2. Flugkörper nach Anspruch 1, dadurch gekennzeichnet, daß man das Zusammenklappen der Flügel dadurch bewerkstelligt, daß man lediglich die Verankerungen (52, 54) und die Träger (48, 50) des Flügelwurzels loslöst, daraufhin den Flügel mittels des Kardanelementes (46) um seine Mittelachse dreht und diesen Flügel, der durch Umlappen des Kardanelementes (46) nach vorne gebracht wurde, entlang des Flugzeugrumpfes unterbringt.

3. Flugkörper nach Anspruch 1, dadurch gekennzeichnet, daß das hintenliegende, horizontale Höhenruder aus zwei parallelen, übereinanderliegenden Elementen (20, 22) besteht, die von den vertikalen Seitenrudern (24, 26) gehalten werden.

4. Flugkörper nach Anspruch 1 und 3, dadurch gekennzeichnet, daß die im «Push-pull»-Tandem angebrachten gegenläufigen Propeller (28, 30) für einen gleichmäßigen und gradliniegen Luftstrom innerhalb des Leitwerkes sorgen.

5. Flugkörper nach Anspruch 1, dadurch gekennzeichnet, daß der Hyperauftrieb dadurch zustande kommt, daß der Luftstrom auf der Saugfläche (Oberseite) des Flügels beschleunigt wird mittels eines Lufteintritts, der sich auf der Flügelunterseite, unter der Flügelvorderkante, vorne befindet, durch Öffnen einer ersten Klappe (56), und später einer zweiten Klappe (62), ohne das dabei das allgemeine Profil des Tragwerkes verändert wird.

6. Flugkörper nach Anspruch 1 und 5 dadurch gekennzeichnet, daß die Hyperauftriebsvorrichtung vervollständigt werden kann durch eine innerhalb des Lufttunnels (72) des Lufteintritts befindliche Turbine mit Tangentialschaufeln, die z.B. elektrisch angetrieben wird, und die für einen Gebläseluftstrom innerhalb des Tunnels (72) für sehr niedrige Fluggeschwindigkeiten sorgt.

7. Flugkörper nach Anspruch 1 ,5 und 6, dadurch gekennzeichnet daß die zu den Flügeln gehörenden zwei Turbinen elektrisch angetrieben und in Serie geschaltet werden.

**Claims**

1. An ultralight aircraft of the three-axis airplane type, twin-engined, with separate flight control surfaces, and a rear stabilizing tail structure, which is comprised by:

a) wings which are foldable without being dismounted, their joints being placed at the point of attachment to the wing root on the upper part of the fuselage, the folded wings being battened completely against the vertical sides of the fuselage;

b) a rear stabilizing tail structure of annular type, having reduced lateral dimensions, being composed of two horizontal elevators (20, 22) aranged horizontally, parallel to each other, lodged between two vertical and parallel rudders (24, 26);

c) a system of hyper-sustentation, on the main (bearing) plane only, the outlet of circulating air by internal ventilation of the wing surface being placed behind the median part of the extrados (upper side of the wing surface).

2. An aircraft as claimed in Claim 1, wherein the folding of the wings is carried out by simply disconnecting the struts (52, 54) and the consoles (48, 50) from the wing root, then by rotating the wing on its median axis, by means of a universal joint (46), and by battening this wing, which has been brought forward by shifting the universal joint, along the length of the fuselage.

3. An aircraft as claimed in Claim 1, wherein the rear horizontal stabilizing elevators are composed of two parallel superposed elements (20, 22) held in place by the vertical rudders (24, 26).

4. An aircraft as claimed in Claim 1 and Claim 3, wherein the constant and laminar airflow inside the tail structure is achieved by the opposing actions of the propellers of the engines (28, 30), mounted as a "push-pull", i.e. contrarotative, tandem.

5. An aircraft as claimed in Claim 1, wherein the hypersustentation is achieved by accelerating the airflow over the extrados (upper side of the wing surface), by means of an air intake placed on the intrados (underside of the wing surface), beneath the leading edge, at the front, by opening a primary trap (56), then, in a second phase, a second trap (62), without modifying the overall profile of the wing surface.

6. An aircraft as claimed in Claim 1 and Claim 5, wherein the hyper-sustentater installation may be supplemented inside the air intake tunnel (72) by a turbine having tangential blades, powered for example by electricity, guaranteeing a forced air circulation inside the tunnel (72), at very low flight speeds.

7. An aircraft as caimed in Claim 1, Claim 5, and Claim 6, wherein two turbines, associated respectively one with each wing, are powered by serial in electric current.

Fig. 1

100ᶜᵐ

Fig. 2

Fig. 3

EP 0 178 206 B1

48

Fig. 4

Fig. 5

46
44

50

46

EP 0 178 206 B1

48

46

54

50

52

Fig. 6

Fig. 7

Fig. 8

54

46

52

EP 0 178 206 B1

**Fig. 9**

100 cm

48 46 50 56 68 69 66 52 54 53

100 cm

Epaiss. = 12,5%

52 66 58 56 62 60 64 72 70 53 54 68 **Fig. 10**

52 66 58 56 62 60 64 72 70 53 54 68 **Fig. 11**

52 66 58 56 62 60 64 72 70 53 54 68 **Fig. 12**

EP 0 178 206 B1